# EUROPEAN PATENT SPECIFICATION

(11) **EP 3 557 366 B1**
(45) Date of publication and mention of the grant of the patent: **07.07.2021**
(21) Application number: 19168363.0
(22) Date of filing: 10.04.2019
(51) Int. Cl.: G05D 23/19, B60N 2/56

(54) **METHOD FOR THE AUTOMATIC CONTROL OF A HEATING SYSTEM, AND ASSOCIATED SYSTEM**
VERFAHREN ZUR AUTOMATISCHEN STEUERUNG EINES HEIZSYSTEMS UND ZUGEHÖRIGES SYSTEM
PROCÉDÉ POUR LE RÉGLAGE AUTOMATIQUE D'UN SYSTÈME DE CHAUFFAGE ET SYSTÈME ASSOCIÉ

(30) Priority: 20.04.2018 ES 201830386
(43) Date of publication of application: 23.10.2019
(73) Proprietor: Seat, S.A., 08760 Martorell (ES)
(72) Inventor: DÍEZ DEL COTILLO, ALBERTO, 08760 Martorell (ES); CCORIMANYA BECERRA, Hernan, 08760 Martorell (ES); MORENO SAAVEDRA, Tania, 08760 Martorell (ES); FARELL ROCA, Mariona, 08760 Martorell, Barcelona (ES); GARCÍA MALDONADO, Sergio, 08760 Martorell (ES); TENA ROCA, Marc, 08760 Martorell, Barcelona (ES); CATALÁN ECHAVE, Iñigo, 08760 Martorell (ES); DE LA GALA FERNÁNDEZ, Marcos, 08760 Martorell (ES)
(74) Representative: Elzaburu S.L.P.

(56) References cited:
- DE-A1- 4 141 062
- US-A1- 2011 048 033
- US-A1- 2015 210 287

## Description

### OBJECT

The patent application concerns a method for the automatic control of a heating system for a vehicle seat, as claimed in claim 1; likewise, the associated system, as claimed in claim 15, both featuring significant innovations and advantages.

### STATE OF THE ART

The current trend in the automobile sector is to reduce the physical actuators present on the console and instrument panel of the vehicle, and to control said functions by means of a touch-screen or interface present at the instrument panel. One of these functions would be the control of the temperature of the interior, and more specifically, the temperature of the seats of the occupants.

In this regard, a control unit for the control of a temperature regulation device, specifically a heating element, as described in document DE102014201545, is well known in the state of the art. Activation of the temperature regulation device is automatic and depends on a minimum temperature defined by the user. Furthermore, its deactivation is also automatic, depending on a maximum temperature also defined by the user.

Said invention would enable the user to preselect values via the console touch-screen, or man-machine interface, although in a totally manual way. From said document it is observed that seeking the goal of automatically regulating a heating element located in a vehicle seat is known. Even so, the margins at which the heating element is activated must be defined manually, it being complicated and counterintuitive for the user to establish and adjust a working minimum and maximum temperature of the system, it being difficult to adapt to the different user requirements regarding the interior temperature of the vehicle.

Therefore, in view of the above, it may be seen that there still exists a
need to achieve a situation of the self-contained operation of the regulation of the intensity or power of the heating in the seat of a vehicle occupant. "Self-contained operation" is understood to be the regulation, and the anticipation of the circumstance in which the user feels hot, reducing the intensity or power of the heating before this occurs.

Document D1 (US2015/210287A1) discloses a vehicle including at least one computer to interface with electronics of the vehicle to access status data for systems of the vehicle and to make input settings to at least one of the systems. The vehicle includes wireless communication circuitry for providing connection to the Internet and to at least one wireless device when paired with the vehicle. An occupancy sensor of the vehicle is configured to interface with the computer of the vehicle to identify occupancy of seats of the vehicle. A processor of the computer of the vehicle is configured to execute instructions to receive data from a wireless device that is paired with the vehicle. The data is used to identify a seat in the vehicle that is associated with a passenger. The processor executes instructions to provide data to a user interface accessed by the wireless device to expose a plurality of systems of the vehicle. The plurality of systems include systems that relate to an environment zone in which the seat is located in the vehicle. The user interface further includes controls to enable input of settings to one or more of the plurality of vehicle systems to make changes to the one or more of the plurality of vehicle systems. The changes made relate to one or more of the plurality of systems that relate to the environment zone of the seat.

Document D2 (DE4141062A1) discloses a heated automobile seat has the seat temperature adjusted in steps under control of a manual selection switch, coupled to a microprocessor (MP) and the temperature within the vehicle passenger space, provided by a Negative Temperature Coefficient (NTC-F). The seat heating (L) is operated at full load during an initial heating up phase and is switched to a lower heating load for maintaining the required seat temperature with the full load supplied for an interval of between 15 and 60 seconds when the switch is adjusted to the next switch position, with automatic cut-out at the end of a timed continuous heating phase, wherein the simple heating control for maintaining optimum comfort.

Document D3 (US2011/048033A1) describes a method for thermally conditioning a space adjacent a seat assembly includes activating a heating element positioned within the seat assembly beneath a seat covering. A fluid module that includes a fluid supply device and a thermoelectric element is activated to direct heated air from the fluid module to a space adjacent the seat assembly through a distribution system formed at least partially in the seat cushion. After a period of time, the heating element is deactivated.

### SUMMARY

The present invention consists of a method for the automation of the operation of the seat heating. This is understood to be the activation of the heating element, the regulation of the intensity of the heating element and the deactivation of said heating element. To this end, the present invention is based on a preliminary step of learning the behaviour of the client with regard to the management of the heating. During this preliminary step, a set of algorithms and a set of parameters are established, which learn from the behaviour of the user, in order to achieve the self-contained operation of the heating system, adapted to the particular needs of each user.

The elimination of the physical actuators currently disposed for the regulation of the air handling system and the heating of the seat enhance the need for the self-contained operation of said systems. In their place, operation will be by means of the screen or interface on the console. Predictive and smart functions will be ever more necessary, due to the fact that it is desired to minimise the interaction with the user and his loss of attention.

Additionally, an object of the present invention is not to increase the technical complexity of current heating systems, avoiding the inclusion of new sensors and/or actuators, such as a temperature sensor at the external surface of the seat, or contact surface with the user.

Specifically, in the present invention it is sought, by means of the everyday learning of the management of the seat heating by the user, to establish an algorithm enabling the prediction of the behaviour of said user in particular.

To achieve said objective, an algorithm must be defined which, without added hardware, can predict the operation of the seat heating for a particular user. This is possible as a relationship has been observed, by means of a series of measurements and tests, between the duration of the use of the heating and the initial temperature of the heating blanket or element, enabling the prediction of the temperature of the surface of the seat, with no need for the disposition of a sensor to measure this directly.

It should be noted that the system of the present invention operates while learning continuously. Thus, after a first learning step, during which the system operates manually and is operated by the user, in order to take measurements and to learn the particular requirements of said user, an algorithm is defined so that the system may function automatically. However, during said modality of automatic functioning, in the event that the user should manually anticipate the deactivation of the heating, or the reduction and/or increase in the intensity of the heating element, the system saves and learns said modifications. The manual modifications saved are used periodically to review whether the algorithm should be modified and adapted to the new requirements of the user.

Specifically, and in the case of a heating unit having different predefined levels of intensity, the present invention seeks to predict the moment at which the user would perform the change of power or intensity of the heating, for example from level 3 (maximum intensity level) to level 2 (medium intensity level), from level 2 to level 1 (low intensity level), and from level 1 to level 0 (deactivation of the heating element). Thus, the system of the present invention establishes a plurality of algorithms and variables which enable the prediction of the moment at which the user would perform a change of intensity between the abovementioned intensity levels.

It should also be noted that the purpose of the heating device or seat heater is to warm the seats of the automobile, and thus to increase the comfort of the user while driving. Said seat heater, in accordance with a particular embodiment, comprises a series of heater cables incorporated in the seat cover of an automobile. It is operated electrically, and ensures a pleasant, comfortable driving sensation in terms of temperature. The heating elements are comprised of flexible electric cables which pass through the seat squab cover, the lateral cushions and the winding of the backrest. The heat is produced by means of resistance elements and by the Joule effect. Depending on the manufacturer of the vehicle, the heating capacity may be set at various steps or levels of intensity. The temperature sensor may be, preferably, of the NTC type, that is, presenting a negative temperature coefficient. Said temperature sensor enables the temperature of the resistance elements to be known. It is stressed that this is not a sensor disposed on the cover, enabling the measurement of the temperature of the surface in contact with the occupant of the seat.

More specifically, the method for the automatic control of a vehicle seat heating system comprises the steps of:
(i) training an algorithm based on at least one manual operation by the user of the heating system, wherein training the algorithm comprises generating a function on the basis of an activation temperature of the heating system and an operating time of the heating system;
(ii) completing the training of the algorithm based on a plurality of manual operations performed by the user; and
(iii) automatically controlling the seat heating system, based on the function generated.

Said heating system may feature various levels of power or heating intensity, or alternatively a single level. The method of the present invention is not limited to a specific configuration of the heating system.

It should be stressed that the activation temperature is understood to be the temperature determined when the heating system is activated manually. This temperature is obtained by means of a sensor disposed in the heating element of the heating system. Said sensor does not necessarily have to be an additional sensor, it preferably being the sensor which measures the temperature of the resistance of the heating element.

Likewise, the operating time is understood to be the time interval from the activation of the heating system to the determination of another manual instruction. The instruction may be a reduction in the level of intensity or power of the heating, or the deactivation of the heating system.

Advantageously, the method of the present invention comprises an additional step of identifying the user occupying the seat, wherein the step of training of the algorithm is additionally based on the user identified, and wherein the step of automatically controlling the seat heating system is additionally based on the user identified. In this way, the system is able to adjust to the specific requirements of each user of the vehicle, generating functions specific to each of the users of the vehicle.

More specifically, the function generated is suitable for the calculation of an estimated time, wherein the estimated time is equivalent to the time of automatic activation of the heating system, wherein the estimated time is based on an initial temperature and on the function generated. In this way, the system is able to automatically regulate the time period between the activation of the heating system and the next instruction to be executed.

It should be stressed that the estimated time is the time calculated based on the function. That is, the period of time which, according to the algorithm, it is estimated that the user will wish to maintain the heating system activated. This may be either the time interval during which to maintain a certain level of heating, or the time interval which should pass before deactivation the heating system.

Likewise, "initial temperature" should be understood to be the temperature determined at the moment of the automatic activation of the heating system. Said temperature is obtained by means of a sensor disposed in the heating system heater element, this not being, as stated above, an additional sensor.

More specifically, the step of training the algorithm comprises the steps of determining a manual activation of the system by the user, obtaining the activation temperature of the heating system, determining a manual instruction in the heating system by the user, calculating the operating time of the heating system from the manual activation determined until the manual instruction determined, memorising the activation temperature obtained and the operating time calculated, and modifying the function on the basis of activation temperature obtained and the operating time calculated. In this way, the algorithm progressively learns the activation times of the heating system, in accordance with the handling thereof performed by the vehicle user.

"Manual instruction" is understood to be any adjustment of the heating system by the user. Said manual instruction may be either the deactivation of the heating system or a reduction in the level of heating intensity or power.

Therefore, in an embodiment wherein the heating system comprises a single intensity level, the manual instruction is equivalent to the deactivation of the heating system by the user.

Conversely, in an embodiment wherein the heating system comprises a plurality of intensity levels, there would be an algorithm for each of these levels. Thus, at an initial step, the manual instruction would be equivalent to a reduction in the intensity of the heating system, in such a way that the operating time of the heating system comprises the period between the manual activation and the reduction in intensity determined. Subsequently, in an intermediate step, the manual instruction would again be equivalent to a reduction in the intensity of the heating system, in such a way that the operating time of the heating system comprises the period between the activation of an intermediate intensity and the reduction in said intensity determined. Finally, the manual instruction would be equivalent to the deactivation of the heating system, in such a way that the operating time of the heating system comprises the period between the activation of a low intensity and the deactivation of the heating system determined.

In a preferred embodiment of the invention, the function is a regression line. Said regression line is defined by the approximation of a plurality of measurements, wherein each measurement comprises an activation temperature and an operating time. At the step of automatic control of the heating system, the regression line will enable the obtaining of an estimated time value based solely on an initial temperature value.

More specifically, the step of training the algorithm comprises an additional step of rejecting the activation temperature obtained and the operating time calculated if the operating time calculated is greater than a predefined maximum value, or if the operating time calculated is less than a predefined minimum value, wherein the predefined maximum value is based on the estimated time and the predefined minimum value is based on the estimated time. The aim of rejecting the activation temperatures obtained and/or the operating time lies in the elimination of measurements distant from the average values obtained. Said distant measurements would significantly modify the function determined, possibly causing it not to adapt to the requirements of the user. By way of an example, in the case where the operating time is beyond the normal limits, for example due to the user forgetting to deactivate the heating, this measurement would cause a distortion and errors in the training of the algorithm.

Therefore, the step of completing the training of the algorithm comprises the determination of a dispersion in the plurality of activation temperatures of the heating system, determined during the step of training the algorithm. "Dispersion" should be understood as a sufficiently wide range of activation temperatures determined. This does not man having a high number of activation temperatures, such as 100; it means that the system has been trained in a range of different temperatures within the spectrum of possible activation temperatures. For example, an ideal training would be 30 measurements, with a difference of 1 degree between the plurality of activation temperatures. Thus, the unnecessary extension of the algorithm training step is avoided, as is the entering of values which would lead to a loss of precision and reliability in the simulation of the operational behaviour of the user.

In accordance with another aspect of the invention, the step of automatically controlling the heating system comprises the steps of determining the presence of a user on the seat, obtaining the initial temperature, calculating the estimated time of operation of the heating system, wherein the estimated time of operation is based on the function generated, and activating the heating system during the estimated time calculated. Thus, and once the estimated time has passed, the heating system proceeds with the next automatic instruction memorised, which may be either deactivating the heating system or reducing the level of heating intensity. Thus, the result is an automatic, self-contained control of the heating system from its activation to its deactivation.

More specifically, the method of the invention comprises an additional step of adjusting the estimated time calculated, wherein adjusting the estimated time comprises reducing by between 1% and 10% of the value of the estimated time calculated. Thus, the method of the present invention anticipates the manual actions of the user. The method understands that if the user performs a manual action, this is due to the fact that his comfort is not optimal. In this way, the method, during the control step of the heating system, anticipates the situations in which the level of control is no longer optimal, improving the sensation of comfort in the user.

In accordance with another aspect of the invention, the step of automatically controlling the heating system comprises activating the heating system if the initial temperature obtained is lower than a temperature limit, wherein the temperature limit is based on the function generated. Thus, the automatic heating system is activated at suitable initial temperatures, preventing its activation when the initial temperatures are determined to be high.

"Temperature limit" should be understood to be the maximum temperature for activation of the heating system. If a particular initial temperature value is above the maximum activation temperature, the step of automatically controlling the heating system will decide not to activate said system. Conversely, if a particular initial temperature value is below the maximum activation temperature, the step of automatically controlling the heating system will decide to activate said heating system.

In a preferred embodiment of the invention, the method comprises an additional step of updating the trained algorithm, in such a way that if a manual instruction to the heating system is performed by the user during the automatic control of the heating system, the algorithm is updated based on the manual instruction determined. In this way, the algorithm is permanently capable of being updated and/or trained during the operation of the heating system and its adjustment by the vehicle user.

More specifically, the step of updating the algorithm comprises determining a manual instruction to the heating system from the user, obtaining the initial temperature, calculating the operating time of the heating system from the activation of the heating system to the manual instruction determined, memorising the initial temperature obtained and the operating time calculated, and modifying the function on the basis of the initial temperature obtained and the operating time calculated. Thus, the function is updated in accordance with the new values which reflect the user's adjustment of the heating system, either adapting to new preferences of the same or correcting prior errors or inaccuracies which might exist in said function generated. This is, therefore, a continued training and optimisation of the algorithm, in the event of detecting manual instructions from the user which differ from the values established by the function generated.

It should be stressed that the initial temperature has been memorised during the step of automatically controlling the heating system.

It may be mentioned that the heating system comprises a plurality of levels of intensity or power, wherein the step of training the algorithm comprises generating a plurality of functions, wherein each function is based on the level of intensity activated, the activation temperature of the heating system and the operating time, wherein the operating time of the heating system corresponds to the time interval wherein each level of intensity is activated. In a non-limitative example of the invention, if the heating system comprises three different levels of intensity or power, the method for automatically controlling the heating system comprises the training of three different algorithms, wherein each algorithm comprises generating an independent function and wherein each function enables the calculation of an independent estimated time for each of the levels of intensity. It is emphasised that each algorithm has been trained based on the manual actions by the user at the corresponding level of intensity.

In a preferred embodiment of the invention, the step of automatically controlling the heating system comprises activating a maximum intensity level in the heating system and reducing the level of intensity based on the plurality of functions generated. In this way, the automatic system regulates the level of heating in accordance with the values at which each of the vehicle users has previously operated the heating.

Another object of the invention is a heating system for a vehicle seat wherein the heating system comprises a control unit configured to execute the method as mentioned above. Said automatic heating system therefore benefits from the aforementioned advantages for each specific embodiment of the method of the present invention. Thus, the heating system comprises at least one heating cable, wherein the at least one heating cable is disposed between the cover and the foam of the seat, wherein the at least one heating cable generates heat due to the Joule effect.

Additionally, the system comprises at least one temperature sensor, wherein the temperature sensor is preferably of the NTC type. Said temperature sensor determines a temperature of the at least one heating cable. It is stressed that this is not a sensor measuring the temperature of the cover, but directly the temperature of the heating cable itself. Additionally, the heating system comprises a control unit, wherein the control unit is connected to the at least one temperature sensor and to at least one clock, wherein the clock calculates the time of operation of the heating system and enables the estimated operating time of the heating system to be controlled.

In the attached drawings, by way of a non-limitative example, a method is portrayed for the automatic control of a heating system and associated system, constituted in accordance with the invention. Other characteristics and advantages of said method for the automatic control of a heating system and associated system, the object of the present invention, will become evident from the description of a preferred, but not exclusive, embodiment, illustrated by way of a non-limitative example in the accompanying drawings, wherein:

### BRIEF DESCRIPTION OF THE DRAWINGS

- Fig. 1.: A perspective view of the driving position of a vehicle, in accordance with the present invention.
- Fig. 2.: A perspective view of a vehicle seat, portraying its internal elements, including a non-specific heating system.
- Fig. 3.: A graph representing the intensity or heating power with regard to time, and the successive drops in the level of said intensity or heating power, in accordance with an embodiment of the present invention.
- Fig. 4.: A graph representing the progress of the temperature with regard to time, with successive drops in the level of said intensity or heating power, in accordance with an embodiment of the present invention.
- Fig. 5.: Portrays the step of training an algorithm in accordance with the present invention.
- Fig. 6.: A series of graphs portraying a series of different values measured during manual operation by a vehicle user, in accordance with the present invention.
- Fig. 7.: A graph portraying a plurality of different algorithms generated based on a plurality of different users, in accordance with the present invention.
- Fig. 8.: Portrays the step of updating the trained algorithm in accordance with at least one manual action by the user, in accordance with the present invention.

### DESCRIPTION

In view of the aforementioned figures, and in accordance with the numbering adopted, an example of a preferred embodiment of the invention may be observed therein, describing the parts and elements thereof described in detail below.

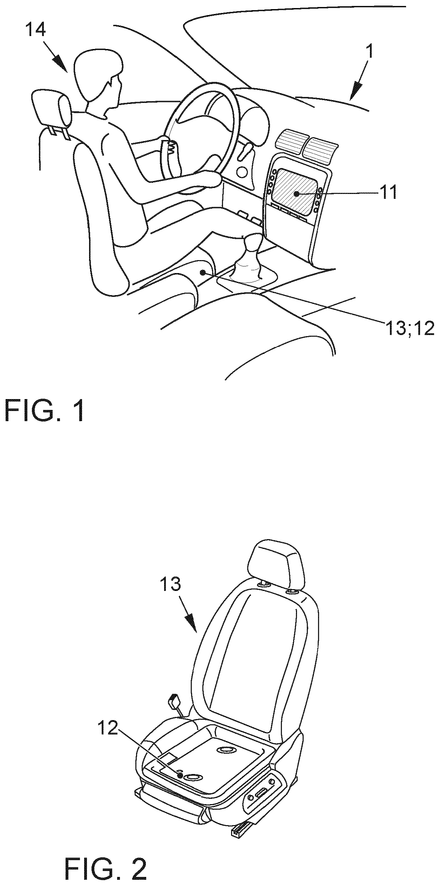

In figure 1, by way of illustration, a perspective view of the driving position of a vehicle 1 may be observed. More specifically, the presence of a control unit 11 and of a heating system 12 disposed on the seat 13 may be seen. The seat 13 is occupied by a user 14 of said vehicle 1. The user 14 can operate the heating system 12 via the control unit 11, within his reach once seated on the seat 13.

The control unit 11 comprises a processing unit, destined to process the information received and to act upon the heating system 12 of the seat 13. Furthermore, said control unit 11 comprises an interface to interact with the user 14, in this case comprising a touch-screen disposed on the instrument panel. Alternatively, said interface may be a set of actuators disposed on the seat 13.

The function of the heating system 12 disposed on the seat 13 is to heat the at least one seat 13 of the vehicle 1 in order to enhance the driving comfort of the user, preferably under low-temperature conditions.

Figure 2 portrays, by way of illustration, a perspective view of the driver's seat 13 of a vehicle 1, showing its internal elements. For example, and more specifically, the heating system 12 in the cushioned part of said seat 13 may be seen, this being where the body of the user 14 principally rests and is supported. Said heating system 12 comprises a heating element, preferably a heating blanket or flexible electric cables disposed between the foam element of the cushion and the external cover of said seat 13 which, by means of the Joule effect, generates heat in order to increase the temperature of the seat 13. Furthermore, said heating system 12 comprises a temperature sensor for the heating element, preferably an NTC sensor to detect the temperature of the heating element. It should be noted that this is not a sensor to measure the temperature of the contact surface between the seat 13 and the occupant 14. Additionally, the heating system 12 communicates with the control unit 11.

Electric blanket technology stems from the heating principle of an electric resistance, and its difficulty lies in the distribution and insulation of the resistor filaments in order that they may fulfil their mission of heating and also present great durability. In accordance with an embodiment, said filaments are sewn directly onto a cloth support of the squab or backrest to which it is to be coupled, and is glued directly to the foam immediately under the upholstery of the seat 13.

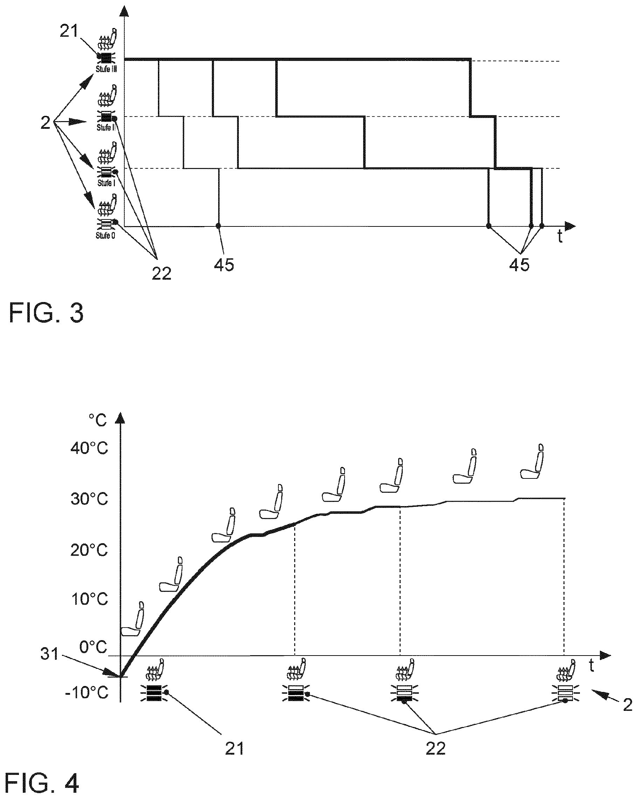

Figure 3, by way of illustration and in greater detail, portrays a graph representing intensity or heating power with regard to time, and the successive drops in the level of said intensity 2 or heating power. More specifically, the variables of the level of intensity 2 may be seen; of the maximum level of intensity 21, of the lower level of intensity 22 and of the operating time 45. It is also seen that the intensity or heating power is established at levels (level of power established portrayed as steps on the graph) wherein level 3 corresponds to maximum operating power of the heating element, level 2 corresponds to medium operating power of the heating element, level 1 corresponds to minimum or low operating power of the heating element and level 0 corresponds to zero power or deactivation of the heating element. Specifically, three graphs are observed, which might correspond to three different users 14, or to three operations of the heating system 12 for a single user 14, wherein a successive descent of the level of intensity 2 may be seen. For each of the different graphs it may be seen that the user 14 has activated each of the different levels of intensity 2, although he has remained at each of the levels of intensity 2 for a different period of time.

In greater detail, the behaviour of a heating system 12 comprising a plurality of (specifically three) predefined levels of intensity 2 is analysed. Under normal conditions, the operation of a heating system 12 such as that disclosed and without the automatic control described in the present invention is as follows:
- activation of the heating system 12 by the user 14,
- starting with a maximum level of intensity 21,
- a manual instruction from the user 14 to reduce the intensity from the level of maximum intensity to the level of medium intensity,
- a manual instruction from the user 14 to reduce the intensity from the level of medium intensity to a level of low intensity, and
- a manual instruction from the user 14 to deactivate the heating system 12.

It should be noted that at any time, the user 14 may once again increase the heating system 12 or deactivate the heating system 12 with no need to activate each of the levels of intensity 2.

Additionally, there exist heating systems 12 comprising a single level of intensity or a variable regulation of the power within each of the predefined levels of intensity. The method of the present invention is capable of automatically controlling any of the heating systems 12 described above.

Figure 4 portrays, by way of illustration, a graph representing the progress of the temperature with regard to time, with successive drops in the level of said intensity 2 or heating power due to the manual operation of the heating system 12 by any user 14.

It may be observed that the user 14 activates the heating system 12 at a particular activation temperature 31. During a first operating time 45, he maintains the level of maximum intensity 21. Next, the user 14 performs a manual action on the heating system 12 to reduce the level of intensity. During a second operating time 45, he maintains the level of medium intensity activated. Next, the user 14 performs a manual action on the heating system 12 to reduce the level of intensity. During a third operating time 45, he maintains the level of low intensity. Finally, the user 14 performs a manual action on the heating system 12 to deactivate the heating system 12.

It should be mentioned that the vertical axis of the graph represents the temperature variable, while the horizontal axis represents the time variable. Below the horizontal axis, a number of graphic elements may be seen, representing the levels of intensity 2 of the heating system 12. Thus, the small horizontal bars observed start from a full activation, and from maximum are reduced by steps, representing the successive levels of intensity 2 of the heating system 12 described (3, 2, 1, 0).

During a manual action of the heating system 12 such as that portrayed in figure 4, the method of the present invention learns from said operation and from the particular requirements of the user 14. Thus, and more specifically, the method of the present invention for the automatic control of the heating system 12 of a seat 13 of a vehicle 1 comprises the steps of:
i) training an algorithm based on at least one manual operation of the heating system 12 by the user 14, wherein training the algorithm comprises generating a function on the basis of an activation temperature 31 of the heating system 12 and an operating time 45 of the heating system 12. It is highlighted that for each of the aforementioned levels of intensity 2 a particular function is generated, which will enable the individual control and regulation of each of the levels of intensity 2;
ii) finalising the training of the algorithm based on a plurality of manual actions by the user 14. That is, the training step finalises when there exists a plurality of actions by the user 14 such as those represented in figure 4;
iii) automatically controlling the heating system 12 of the seat 13 based on the function generated. Once the requirements and particularities of the user 14 are known and have been learnt, the function controlling each of the levels of intensity 2 is sufficiently robust for the control of the heating system 12 to be automatic.

The aim of the function generated is to enable the estimation of a time during which each level of intensity 2 is maintained. Thus, by means of the function, the estimated time 46 during which it is foreseen that the control method will maintain the level of intensity 2 activated will be calculated. As may be seen, the calculation is very simple, as the estimated time 46 will depend solely on the initial temperature 32 at which the heating system 12 has been activated.

It is highlighted that, in a system comprising a plurality of levels of intensity 2, an independent function will be generated which will estimate the time during which each level should be maintained.

In order that each algorithm may adapt to the particular temperature requirements of each user 14, the initial or learning step, or the training of the algorithm, is individualised for each user 14. Thus, by means of facial recognition, or recognition of the key activating the vehicle... the user occupying the seat 13 is identified. Thus, in a first step of the method, the specific requirements of the user 14 are learnt. Subsequently, in a third step of the method, the heating system 12 is controlled in accordance with the specific requirements learnt for the user 14 identified. Preferably, the time of year will be taken into account, in order to establish suitable operating temperatures, both in the training step and in the training finalisation step.

In greater detail, as may be seen in figure 4, the algorithm training step comprises the steps of:
- determining a manual activation of the heating system 12 by the user 14,
- obtaining the activation temperature of the heating system 12,
- determining a manual instruction to the heating system 12 by the user 14,
- calculating the operating time 45 of the heating system 12 from the manual activation determined until the manual instruction determined,
- memorising the activation temperature 31 obtained and the operating time 45 calculated, and
- modifying the function based on the activation temperature 31 obtained and the operating time 45 calculated.

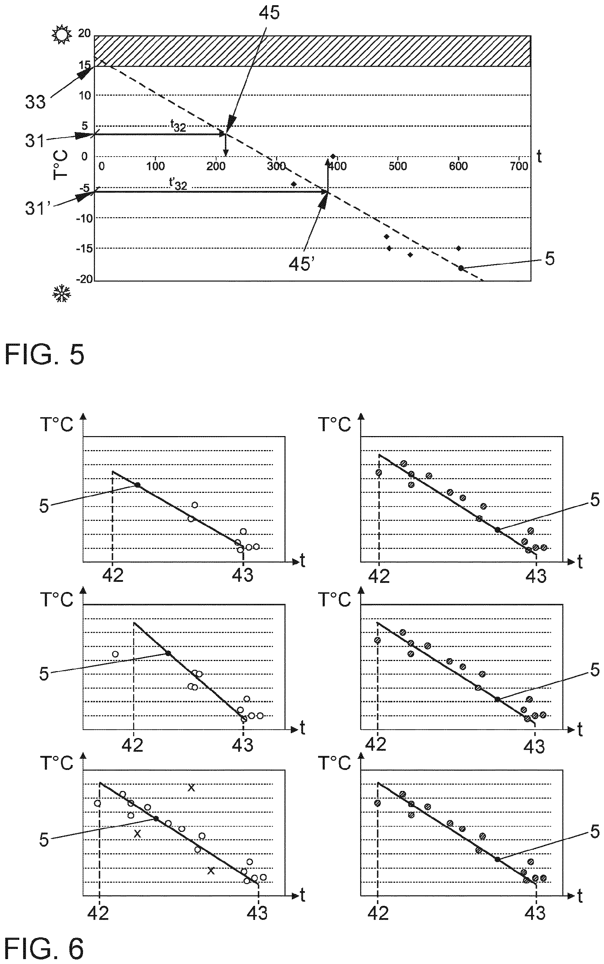

Figure 5 portrays, by way of illustration, the training step of an algorithm for any level of intensity 2. To simplify the explanation, the maximum intensity level 22 will be used. In said graph, the vertical axis represents the temperature and the horizontal axis the time.

During the training step, a cloud of points is determined on the above graph. Each point is determined by the activation temperature 31 at which the heating system 12 was activated and the operating time 45, represented as t32, at which the heating system 12 has been maintained at the maximum level of intensity 21. A second measurement is determined and represented on the graph by the point generated by a new activation temperature 31' and operating time 45', represented as t32'. By means of these points, a function is generated, in particular, a regression line 5. Said regression line 5 is updated and modified whenever a new point or measurement is determined. It is highlighted that only two specific variables are required to generate the algorithm of the present invention: the activation temperature 31 and the operating time 45.

By means of the regression line presented in figure 5, the method will be able to calculate the estimated time 46 during which a level of intensity 22 is maintained activated. Thus, and in the automatic control step of the heating system 12, the method of the invention determines an initial temperature 32 at which the heating system 12 is activated. By means of the regression line 5 generated during the learning step and said initial temperature 32, the estimated time 46 of operation of the heating system 12 is calculated. Once this estimated time 46 has passed, the heating system 12 will be deactivated or the level of intensity 2 will be reduced, depending on the current control step of the system.

Additionally, and as may be seen in figure 5, at the vertical axis an activation temperature 31 may be seen, beyond which the heating system commences operating, provided that we are below the temperature limit 33. In accordance with the function of the graph, which specifically is a regression line 5, each activation temperature 31 is corresponded by an operating time 45, on conclusion whereof the heating system 12 is deactivated. Said temperature limit 33 is determined during the learning step and in accordance with the preferences of the user 14.

Note that, in a first embodiment, all the levels of intensity 2 calculated are calculated based on a regression line 5, wherein each regression line 5 is different for each level of intensity 2.

In a second embodiment, only the first level of maximum intensity is calculated by the regression line 5, while the remainder of the levels of intensity 2 have a constant value of estimated time 46 for each level of intensity 2. With regard to the changes in the low level of intensity 22, it has been observed, by experimentation, that the time during which the user 14 remains at a particular level of intensity 2 is approximately constant. Therefore, the function determined is a constant time for said low levels of intensity 22, said constant value being determined during the algorithm training step. Optionally, said constant time value is based on the user 14 identified. Thus, the computational cost is reduced, but a high level of comfort is maintained for the user 14.

In a third embodiment, the heating system 12 comprises a single level of intensity, wherein the operating time 45 corresponds to the interval during which the heating system 12 is activated.

Figure 6 portrays, by way of illustration, a series of graphs representing on the vertical and horizontal axes the time at which a disconnection occurs, or a drop in the level of intensity 2 or power. Additionally, each graph portrays a regression line 5 generated from a plurality of measurements determined during the algorithm learning step.

As has been mentioned above, the algorithm on which the present invention is based is subjected to a process of learning and of the creation of a regression line 5. Thus, knowing the activation temperature 31 of the heating system 12 at which the process commences, and the activation time 45 during which the user remains at the maximum level of heating intensity 21, each point of the aforementioned regression line 5 is obtained.

The two upper graphs portrayed in figure 6 portray in greater depth the step of finalising the training of the algorithm. Specifically, the upper left-hand graph portrays a plurality of measurements. Each measurement is formed by an activation temperature 31 and an activation time 45. Thus, it may be observed that the activation temperatures 31 are grouped; that is, their dispersion is low; therefore, the regression line may contain inaccuracies. Conversely, the upper right-hand graph portrays a plurality of measurements, wherein the activation temperatures 31 are considerably dispersed, making the regression line 5 more exact. It is thus shown how the prediction will be much more reliable if there are values at different initial temperatures 32, instead of the majority of said values being concentrated in the same area or the same range.

Therefore, the training process of the algorithm of the present invention concludes when there is a sufficient dispersion between activation temperatures 31 determined during said training step.

Preferably, and to take into account a good dispersion of activation temperatures 31 of the heating system 12, the time of day of the manual activation and the season of the year of said manual activation must be borne in mind, given that, according to the moment, the data or measurements of the manual actions influence the generation of the function and the calculation of the estimated time 46.

Additionally, the two graphs disposed at the central part of figure 6 portray in greater depth the step of training the algorithm. In detail, there exists a rejection of the measurements obtained during the training step if the operating time 45 obtained is greater than a predefined maximum value 42, or if the operating time 45 obtained is lower than a predefined minimum value 43. As may be observed in the figure on the left, an operating time value 45 for a particular activation temperature 31 is lower than the predefined minimum value 43; therefore, said measurement will be rejected and will not modify the function or regression line 5. Conversely, if an operating time value 45 is within the interval between the predefined maximum value 42 and the predefined minimum value 43, the measurement will be memorised and will modify the function based on said new values.

Said values of predefined maximum value 42 and predefined minimum value 43 are obtained based on the operating time 45. Thus, said values are determined by multiplying by a fixed value the operating time 45 obtained for a particular initial temperature 32. For example, the fixed value could be 20%.

Another example of rejecting a measurement performed is portrayed in the lower graphs of figure 6, wherein it may be seen that the points marked with an "x" are outside predefined limits; therefore, the activation temperature value 31 and operating time value 45 do not update the regression line 5. This rejection is performed once sufficient values for the generation of a regression line 5 have been obtained.

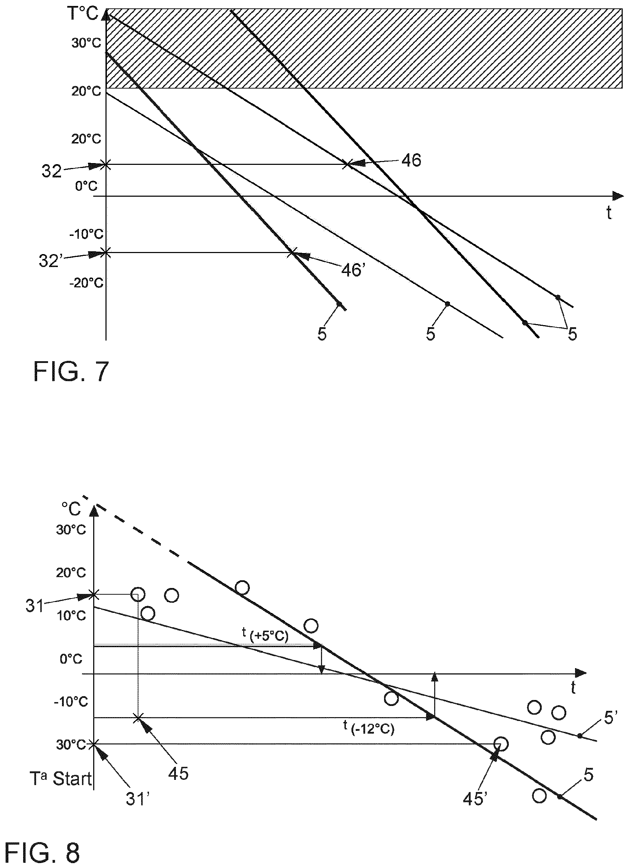

Figure 7 portrays, by way of illustration, a series of functions, preferable regression lines generated during the learning step. In greater detail, different regression lines 5 may be seen, wherein each comprises a different slope and a different temperature limit 33. Each regression line is in accordance with an independent learning for each user 14.

In greater detail, the temperature is represented at the vertical axis and the time at the horizontal axis, wherein each regression line 5 portrays the relationship between the initial temperature 32 and the estimated time 46 for each user 14.

Thus, in accordance with figure 7, it is revealed that the step of automatically controlling the heating system 12 comprises:
- identifying a user 14 on the seat 13, either by image analysis or by means of the key inserted into the vehicle, or by manual indication by the user 14 himself,
- measuring the initial temperature 32 at the moment of activating the vehicle,
- calculating the estimated time 46 during which the level of intensity 2 of the heating system 12 will remain activated. Said estimated time 46 is obtained by means of the regression line 5, based on the initial temperature 32,
- activating the heating system 12 during the estimated time 46 calculated.

It is highlighted that during the algorithm learning or training process, a temperature limit 33, at which the heating system 12 will not be activated, is established for each of the different users 14. Said frontier or upper limit is defined by each user 14 in accordance with the measurements obtained during the algorithm training step.

It is highlighted that, as may be seen in figure 7, for a particular initial temperature value 32 and during the step of automatically controlling the heating system 12, the estimated time 46 of activation of the system will be different for each of the users 14.

One of the aims of the present invention is to perform an automatic control anticipating the situations in which the comfort of the user 14 is no longer optimal. To this end, the method of the present invention comprises an additional step of adjusting the estimated time 46 calculated, wherein adjusting the estimated time 46 comprises reducing by between 1% and 10% of the value of the estimated time 46 calculated. That is, displacing a particular value of the regression line 5 towards the left. Thus, for a particular initial temperature 32, the system will obtain a lower value of estimated time 46, anticipating the moment where the user 14 will need to reduce the level of intensity 2 of the heating system 12.

Thus, the heating system 12 will perform constantly the changes in level of intensity 2 by between 10% and 1%, preferably 5%, in order to anticipate the sensation of heat, improving the comfort of the user 14.

Figure 8 portrays a step of updating the algorithm obtained during the training step, based on different manual adjustments by the user 14 (the black dots) performed during the automatic control step. In greater detail, during the automatic control of the heating system 12, there exists the possibility of the user 14 contradicting the automatic actions performed by means of manual actions. The method will re-train the algorithm in accordance with said manual actions.

Thus, as may be observed in figure 8, a regression line 5 has been generated during the training step. During the automatic control step, two manual actions have been determined:
- on the one hand, at an activation temperature 31, the user 14 has anticipated the estimated time 46 dictated by the regression line 5; therefore, the activation of the heating system 12 has remained at a shorter operating time 45 than the estimated time 46;
- on the other hand, at an activation temperature 31', the user 14 has anticipated the estimated time 46 dictated by the regression line 5; therefore, the activation of the heating system 12 has remained at a longer operating time 45' than the estimated time 46.

In view of these two measurements, the method memorises the initial temperatures 32 and 32' at which the activation of the heating system 12 has occurred and the operating times 45 and 45' calculated, and the regression line 5 is modified until a new regression line 5' is generated based on said new measurements.

### LIST OF NUMERICAL REFERENCES

- 1: Vehicle
- 11: Control unit
- 12: Heating system
- 13: Seat
- 14: User
- 2: Level of intensity
- 21: Maximum level of intensity
- 22: Low level of intensity
- 31: Activation temperature
- 32: Initial temperature
- 33: Temperature limit
- 41: Predefined medium value
- 42: Predefined maximum value
- 43: Predefined minimum value
- 45: Operating time
- 46: Estimated time
- 5: Regression line

## Claims

1. A method for the automatic control of a heating system (12) for the seat (13) of a vehicle (1), wherein the method comprises the steps of learning
the management of the heating system (12) resulting from a manual operation of a user (14),
i) training an algorithm based on the at least one manual operation of the heating system (12) by the user (14),
ii) completing the training of the algorithm based on a plurality of manual operations performed by the user (14),
iii) automatically controlling the seat (13) heating system (12),
**characterized in that** the step i) comprises determining a plurality of measurements, wherein each measurement comprises an activation temperature (31) and an operating time (45), wherein the activation temperature (31) is the temperature determined if the heating system (12) is activated manually, by means of a sensor disposed in the heating element of the heating system (12), and wherein the operating time (45) is the time interval from the activation of the heating system (12) to the determination of another manual instruction,
the step ii) comprises generating a function based on the plurality of measurements determined, wherein the function obtained if completing step ii) enables the calculation of an estimated time (46), wherein the estimated time (46) is equivalent to the time of automatic activation of the heating system (12), wherein the estimated time (46) is based on an initial temperature (32) and on the function generated, wherein the initial temperature (32) is the temperature determined by the sensor at the moment of the automatic activation of the heating system (12), and
wherein the step iii) comprises automatically controlling the seat (13) heating system (12), based on the function generated.

2. Method according to claim 1, comprising an additional step of identifying the user (14) occupying the seat (13), wherein the step of training the algorithm is additionally based on the user (14) identified, and wherein the step of automatically controlling the seat (13) heating system (12) is additionally based on the user (14) identified.

3. Method according to either of the preceding claims, wherein the function generated is suited for the calculation of an estimated time (46), wherein the estimated time (46) is equivalent to the time of automatic activation of the heating system (12), wherein the estimated time (46) is based on an initial temperature (32) and on the function generated.

4. Method according to claim 3, wherein the step of training the algorithm comprises the steps of:
- determining a manual activation of the heating system (12) by the user (14),
- obtaining the activation temperature (31) of the heating system (12),
- determining a manual instruction in the heating system (12) by the user (14),
- calculating the operating time (45) of the heating system (12) from the manual activation determined until the manual instruction determined,
- storing the activation temperature (31) obtained and the operating time (45) calculated, and
- modifying the function based on the activation temperature (31) obtained and the operating time (45) calculated.

5. Method according to claim 4, wherein the function is a regression line (5).

6. Method according to any of the claims 4 or 5, wherein the step of training the algorithm comprises an additional step of rejecting the activation temperature (31) obtained and the operating time (45) calculated if the operating time (45) calculated is greater than a predefined maximum value (42), or if the operating time (45) is less than a predefined minimum value (43), wherein the predefined maximum value (42) is based on the estimated time (46) and wherein the predefined minimum value (43) is based on the estimated time (46).

7. Method according to any of the preceding claims, wherein the step of finalising the training of the algorithm comprises the determination of a dispersion in the plurality of activation temperatures (31) of the heating system (12), determined during the step of training the algorithm.

8. Method according to claim 3, wherein the step of automatically controlling the heating system (12) comprises the steps of:
- determining the presence of a user (14) on the seat (13),
- obtaining the initial temperature (32),
- calculating the estimated time (46) of operation of the heating system (12), wherein the estimated time (46) of operation is based on the function generated, and
- activating the heating system (12) during the estimated time (46) calculated.

9. Method according to claim 8, comprising an additional step of adjusting the estimated time (46) calculated, wherein adjusting the estimated time (46) comprises reducing by between 1% and 10% of the value of the estimated time (46) calculated.

10. Method according to any of the claims 8 or 9, wherein the step of automatically controlling the heating system (12) comprises activating the heating system (12) if the initial temperature (32) obtained is lower than a temperature limit (33), wherein the temperature limit (33) is based on the function generated.

11. Method according to any of the claims 8 or 10, comprising an additional step of updating the trained algorithm, in such a way that if a manual instruction to the heating system (12) is performed by the user (14) during the automatic control of the heating system (12), the algorithm is updated based on the manual instruction determined.

12. Method according to claim 11, wherein the step of updating the algorithm comprises:
- determining a manual instruction to the heating system (12) from the user (14),
- obtaining the initial temperature (32),
- calculating the operating time (45) of the heating system (12) from the activation of the heating system (12) to the manual instruction determined,
- storing the initial temperature (32) obtained and the operating time (45) calculated, and
- modifying the function based on the initial temperature (32) obtained and the operating time (45) calculated.

13. Method according to any of the preceding claims, wherein the heating system (12) comprises a plurality of levels of intensity (2), wherein the step of training the algorithm comprises generating a plurality of functions, wherein each function is based on the level of intensity (2) activated, the activation temperature (31) of the heating system (12) and the operating time (45), wherein the operating time (45) of the heating system (12) corresponds to the time interval wherein each level of intensity (2) is activated.

14. Method according to claim 13, wherein the step of automatically controlling the heating system (12) comprises activating a maximum intensity level (21) in the heating system (12) and reducing the level of intensity (2) based on the plurality of functions generated.

15. A heating system (12) for the seat (13) of a vehicle (1), wherein the heating system (12) comprises a control unit (11) configured to execute the method as claimed in any of the preceding claims.

## Patentansprüche

1. Verfahren zur automatischen Steuerung eines Heizsystems (12) für den Sitz (13) eines Fahrzeugs (1), wobei das Verfahren die Schritte des Lernens der Verwaltung des Heizsystems (12) umfasst, die sich aus einer manuellen Bedienung eines Benutzers (14) ergeben,
i) Trainieren eines Algorithmus basierend auf der mindestens einen manuellen Bedienung des Heizsystems (12) von dem Benutzer (14),
ii) Abschließen des Trainierens des Algorithmus auf der Grundlage einer Vielzahl von manuellen Operationen, die vom Benutzer ausgeführt werden (14),
iii) automatisches Steuern des Heizsystems (12) des Sitzes (13),
**dadurch gekennzeichnet, dass** der Schritt i) das Bestimmen einer Vielzahl von Messungen umfasst, wobei jede Messung eine Aktivierungstemperatur (31) und eine Betriebszeit (45) umfasst, wobei die Aktivierungstemperatur (31) die Temperatur ist, die bestimmt wird, wenn das Heizsystem (12) manuell mittels eines Sensors aktiviert wird, der in dem Heizelement des Heizsystems (12) angeordnet ist, und wobei die Betriebszeit (45) das Zeitintervall von der Aktivierung des Heizsystems (12) bis zur Bestimmung einer anderen manuellen Anweisung ist,
der Schritt ii) das Erzeugen einer Funktion basierend auf der Vielzahl von bestimmten Messungen umfasst, wobei die Funktion, die erhalten wird, wenn Schritt ii) abgeschlossen wird, die Berechnung einer geschätzten Zeit (46) ermöglicht, wobei die geschätzte Zeit (46) der Zeit der automatischen Aktivierung des Heizsystems (12) äquivalent ist, wobei die geschätzte Zeit (46) auf einer Anfangstemperatur (32) und auf der erzeugten Funktion basiert, wobei die Anfangstemperatur (32) die vom Sensor zum Zeitpunkt der automatischen Aktivierung des Heizsystems (12) bestimmte Temperatur ist, und
wobei der Schritt iii) das automatische Steuern des Heizsystems (12) des Sitzes (13) umfasst, basierend auf der generierten Funktion.

2. Verfahren nach Anspruch 1, umfassend einen zusätzlichen Schritt zum Identifizieren des Benutzers (14), der den Sitz (13) einnimmt, wobei der Schritt des Trainierens des Algorithmus zusätzlich auf dem identifizierten Benutzer (14) basiert, und wobei der Schritt des automatischen Steuerns des Heizsystems (12) des Sitzes (13) zusätzlich auf dem identifizierten Benutzer (14) basiert.

3. Verfahren nach einem der vorhergehenden Ansprüche, wobei die erzeugte Funktion zur Berechnung einer geschätzten Zeit (46) geeignet ist, wobei die geschätzte Zeit (46) der Zeit der automatischen Aktivierung des Heizsystems (12) äquivalent ist, wobei die geschätzte Zeit (46) auf einer Anfangstemperatur (32) und auf der erzeugten Funktion basiert.

4. Verfahren nach Anspruch 3, wobei der Schritt des Trainierens des Algorithmus die Schritte umfasst von:
- Bestimmen einer manuellen Aktivierung des Heizsystems (12) vom Benutzer (14),
- Ermitteln der Aktivierungstemperatur (31) des Heizsystems (12),
- Bestimmen einer manuellen Anweisung im Heizsystem (12) vom Benutzer (14),
- Berechnen der Betriebszeit (45) des Heizungssystems (12) von der ermittelten manuellen Aktivierung bis zur Bestimmung der manuellen Anweisung,
- Speichern der erhaltenen Aktivierungstemperatur (31) und der berechneten Betriebszeit (45) und
- Modifizieren der Funktion basierend auf der erhaltenen Aktivierungstemperatur (31) und der berechneten Betriebszeit (45).

5. Verfahren nach Anspruch 4, wobei die Funktion eine Regressionslinie (5) ist.

6. Verfahren nach einem der Ansprüche 4 oder 5, wobei der Schritt des Trainierens des Algorithmus einen zusätzlichen Schritt des Zurückweisens der erhaltenen Aktivierungstemperatur (31) und der berechneten Betriebszeit (45) umfasst, wenn die berechnete Betriebszeit (45) größer als ein vordefinierter Maximalwert (42) ist, oder wenn die Betriebszeit (45) kleiner als ein vordefinierter Minimalwert (43) ist, wobei der vordefinierte Maximalwert (42) auf der geschätzten Zeit (46) basiert und wobei der vordefinierte Minimalwert (43) auf der geschätzten Zeit (46) basiert.

7. Verfahren nach einem der vorhergehenden Ansprüche, wobei der Schritt des Finalisierens des Trainierens des Algorithmus die Bestimmung einer Dispersion in der Vielzahl von Aktivierungstemperaturen (31) des Heizsystems (12) umfasst, die während des Schrittes des Trainierens des Algorithmus bestimmt wird.

8. Verfahren nach Anspruch 3, wobei der Schritt des automatischen Steuerns des Heizsystems (12) die Schritte umfasst von:
- Bestimmen der Anwesenheit eines Benutzers (14) auf dem Sitz (13),
- Erhalten der Anfangstemperatur (32),
- Berechnen der geschätzten Betriebszeit (46) des Heizsystems (12), wobei die geschätzte Betriebszeit (46) auf der erzeugten Funktion basiert, und
- Aktivieren des Heizsystems (12) während der berechneten geschätzten Zeit (46).

9. Verfahren nach Anspruch 8, umfassend einen zusätzlichen Schritt zum Einstellen der berechneten geschätzten Zeit (46), wobei das Einstellen der geschätzten Zeit (46) das Reduzieren des berechneten Wertes der geschätzten Zeit (46) um zwischen 1% und 10% umfasst .

10. Verfahren nach einem der Ansprüche 8 oder 9, wobei der Schritt des automatischen Steuerns des Heizsystems (12) das Aktivieren des Heizsystems (12) umfasst, wenn die erhaltene Anfangstemperatur (32) niedriger als eine Temperaturgrenze (33) ist, wobei die Temperaturgrenze (33) auf der erzeugten Funktion basiert.

11. Verfahren nach einem der Ansprüche 8 oder 10, umfassend einen zusätzlichen Schritt zum Aktualisieren des trainierten Algorithmus, so dass, wenn der Benutzer (14) während der automatischen Steuerung des Heizsystems (12) eine manuelle Anweisung an das Heizsystem (12) ausführt, wird der Algorithmus basierend auf der ermittelten manuellen Anweisung aktualisiert.

12. Verfahren nach Anspruch 11, wobei der Schritt des Aktualisierens des Algorithmus umfasst:
- Bestimmen einer manuellen Anweisung an das Heizsystem (12) vom Benutzer (14),
- Erhalten der Anfangstemperatur (32),
- Berechnen der Betriebszeit (45) des Heizsystems (12) von der Aktivierung des Heizsystems (12) bis zur ermittelten manuellen Anweisung,
- Speichern der erhaltenen Anfangstemperatur (32) und der berechneten Betriebszeit (45) und
- Modifizieren der Funktion basierend auf der erhaltenen Anfangstemperatur (32) und der berechneten Betriebszeit (45).

13. Verfahren nach einem der vorhergehenden Ansprüche, wobei das Heizsystem (12) mehrere Intensitätspegel (2) umfasst, wobei der Schritt des Trainierens des Algorithmus das Erzeugen einer Vielzahl von Funktionen umfasst, wobei jede Funktion auf dem aktivierten Intensitätsniveau (2), der Aktivierungstemperatur (31) des Heizsystems (12) und der Betriebszeit (45) basiert, wobei die Betriebszeit (45) des Heizsystems (12) dem Zeitintervall entspricht, in dem jeder Intensitätspegel (2) aktiviert ist.

14. Verfahren nach Anspruch 13, wobei der Schritt des automatischen Steuerns des Heizsystems (12) das Aktivieren eines maximalen Intensitätspegels (21) in dem Heizsystem (12) und das Verringern des Intensitätspegels (2) basierend auf der Vielzahl der erzeugten Funktionen.

15. Heizsystem (12) für den Sitz (13) eines Fahrzeugs (1), wobei das Heizsystem (12) eine Steuereinheit (11) umfasst, die konfiguriert ist, um das Verfahren auszuführen, wie in einem der vorhergehenden Ansprüche beansprucht.

## Revendications

1. Procédé pour le réglage automatique d'un système de chauffage (12) pour le siège (13) d'un véhicule (1), dans lequel le procédé comprend les étapes d'apprentissage de la gestion du système de chauffage (12) résultant d'une opération manuelle d'un utilisateur (14),
i) entraînement d'un algorithme sur la base d'au moins une opération manuelle du système de chauffage (12) par l'utilisateur (14),
ii) accomplissement de l'entraînement de l'algorithme sur la base d'une pluralité d'opérations manuelles effectuées par l'utilisateur (14),
iii) réglage automatique du système de chauffage (12) du siège (13),
**caractérisé en ce que** l'étape i) comprend la détermination d'une pluralité de mesures, où chaque mesure comprend une température d'activation (31) et un temps de fonctionnement (45), où la température d'activation (31) est la température déterminée si le système de chauffage (12) est activé manuellement, au moyen d'un capteur disposé dans l'élément chauffant du système de chauffage (12), et où le temps de fonctionnement (45) est l'intervalle de temps entre l'activation du système de chauffage (12) et la détermination d'une autre instruction manuelle,
l'étape ii) comprend la génération d'une fonction sur la base de la pluralité de mesures déterminées, où la fonction obtenue si l'étape ii) est accomplie permet le calcul d'un temps estimé (46), où le temps estimé (46) est équivalent au temps d'activation automatique du système de chauffage (12), où le temps estimé (46) est basé sur une température initiale (32) et sur la fonction générée, où la température initiale (32) est la température déterminée par le capteur au moment de la activation automatique du système de chauffage (12), et
où l'étape iii) comprend le réglage automatique du système de chauffage (12) du siège (13), sur la base de la fonction générée.

2. Procédé selon la revendication 1, comprenant une étape supplémentaire d'identification de l'utilisateur (14) occupant le siège (13), dans lequel l'étape d'entraînement de l'algorithme est en outre basée sur l'utilisateur (14) identifié, et dans lequel l'étape de réglage automatique du système de chauffage (12) du siège (13) est en outre basée sur l'utilisateur (14) identifié.

3. Procédé selon l'une ou l'autre des revendications précédentes, dans lequel la fonction générée est adaptée au calcul d'un temps estimé (46), où le temps estimé (46) est équivalent au temps d'activation automatique du système de chauffage (12), où le temps estimé (46) est basé sur une température initiale (32) et sur la fonction générée.

4. Procédé selon la revendication 3, dans lequel l'étape d'entraînement de l'algorithme comprend les étapes consistant à:
- déterminer une activation manuelle du système de chauffage (12) par l'utilisateur (14),
- obtenir la température d'activation (31) du système de chauffage (12),
- déterminer une instruction manuelle dans le système de chauffage (12) par l'utilisateur (14),
- calculer le temps de fonctionnement (45) du système de chauffage (12) à partir de l'activation manuelle déterminée jusqu'à l'instruction manuelle déterminée,
- mémoriser la température d'activation (31) obtenue et le temps de fonctionnement (45) calculé, et
- modifier la fonction sur la base de la température d'activation (31) obtenue et du temps de fonctionnement (45) calculé.

5. Procédé selon la revendication 4, dans lequel la fonction est une droite de régression (5).

6. Procédé selon l'une quelconque des revendications 4 ou 5, dans lequel l'étape d'entraînement de l'algorithme comprend une étape supplémentaire de rejet de la température d'activation (31) obtenue et du temps de fonctionnement (45) calculé si le temps de fonctionnement (45) calculé est supérieure à une valeur maximale prédéfinie (42), ou si le temps de fonctionnement (45) est inférieur à une valeur minimale prédéfinie (43), où la valeur maximale prédéfinie (42) est basée sur le temps estimé (46) et où la valeur minimale prédéfinie (43) est basée sur le temps estimé (46) .

7. Procédé selon l'une quelconque des revendications précédentes, dans lequel l'étape de finalisation de l'entraînement de l'algorithme comprend la détermination d'une dispersion dans la pluralité de températures d'activation (31) du système de chauffage (12), déterminée lors de l'étape d'entraînement de l'algorithme.

8. Procédé selon la revendication 3, dans lequel l'étape de commande automatique du système de chauffage (12) comprend les étapes consistant à:
- déterminer la présence d'un utilisateur (14) sur le siège (13),
- obtenir la température initiale (32),
- calculer le temps estimé (46) de fonctionnement du système de chauffage (12), où le temps estimé (46) de fonctionnement est basé sur la fonction générée, et
- activer le système de chauffage (12) pendant le temps estimé (46) calculé.

9. Procédé selon la revendication 8, comprenant une étape supplémentaire d'ajustement du temps estimé (46) calculé, dans lequel l'ajustement du temps estimé (46) comprend la réduction entre 1% et 10% de la valeur du temps estimé (46) calculé.

10. Procédé selon l'une quelconque des revendications 8 ou 9, dans lequel l'étape de réglage automatique du système de chauffage (12) comprend l'activation du système de chauffage (12) si la température initiale (32) obtenue est inférieure à une limite de température (33), où la limite de température (33) est basée sur la fonction générée.

11. Procédé selon l'une quelconque des revendications 8 ou 10, comprenant une étape supplémentaire de mise à jour de l'algorithme entraîné, de telle sorte que si une instruction manuelle au système de chauffage (12) est effectuée par l'utilisateur (14) pendant le réglage automatique du système de chauffage (12), l'algorithme est mis à jour sur la base de l'instruction manuelle déterminée.

12. Procédé selon la revendication 11, dans lequel l'étape de mise à jour de l'algorithme consiste à:
- déterminer une instruction manuelle de l'utilisateur (14) au système de chauffage (12),
- obtenir la température initiale (32),
- calculer le temps de fonctionnement (45) du système de chauffage (12) depuis l'activation du système de chauffage (12) jusqu'à l'instruction manuelle déterminée,
- mémoriser la température initiale (32) obtenue et le temps de fonctionnement (45) calculé, et
- modifier la fonction sur la base de la température initiale (32) obtenue et du temps de fonctionnement (45) calculé.

13. Procédé selon l'une quelconque des revendications précédentes, dans lequel le système de chauffage (12) comprend une pluralité de niveaux d'intensité (2), où l'étape d'entraînement de l'algorithme comprend la génération d'une pluralité de fonctions, où chaque fonction est basée sur le niveau d'intensité (2) activé, la température d'activation (31) du système de chauffage (12) et le temps de fonctionnement (45), où le temps de fonctionnement (45) du système de chauffage (12) correspond à l'intervalle de temps où chaque niveau d'intensité (2) est activé.

14. Procédé selon la revendication 13, dans lequel l'étape de réglage automatique du système de chauffage (12) comprend l'activation d'un niveau d'intensité maximal (21) dans le système de chauffage (12) et la réduction du niveau d'intensité (2) sur la base de la pluralité de fonctions générées.

15. Système de chauffage (12) pour le siège (13) d'un véhicule (1), dans lequel le système de chauffage (12) comprend une unité de commande (11) configurée pour exécuter le procédé selon l'une quelconque des revendications précédentes.
